# EUROPÄISCHE PATENTSCHRIFT

(11) **EP 0 639 246 B1**
(45) Veröffentlichungstag und Bekanntmachung des Hinweises auf die Patenterteilung: **17.01.1996**
(21) Anmeldenummer: 93909547.7
(22) Anmeldetag: 05.05.1993
(51) Int. Cl.: F16D 65/56, F16D 65/16, F16D 55/226

(54) **BETÄTIGUNGSVORRICHTUNG MIT SELBSTTÄTIGER NACHSTELLUNG AN SCHEIBENBREMSEN, INSBESONDERE FÜR LASTKRAFTWAGEN UND OMNIBUSSE**
ACTUATOR WITH AUTOMATIC READJUSTMENT FOR DISK BRAKES, IN PARTICULAR FOR LORRIES AND BUSES
DISPOSITIF DE COMMANDE AVEC RATTRAPAGE DE JEU AUTOMATIQUE POUR FREINS A DISQUE, NOTAMMENT POUR POIDS LOURDS ET AUTOBUS

(30) Priorität: 05.05.1992 DE 9206052 U; 29.06.1992 DE 9208699 U
(43) Veröffentlichungstag der Anmeldung: 22.02.1995
(73) Patentinhaber: LUCAS INDUSTRIES PUBLIC LIMITED COMPANY, Solihull, West Midlands B91 3TX (GB)
(72) Erfinder: GIERING, Wilfried, D-5442 Mendig (DE); HOLL, Franz-Helmut, D-5581 Mastershausen (DE)
(74) Vertreter: Goetz, Rupert, Dipl.-Ing.
(86) Internationale Anmeldenummer: EP9301101
(87) Internationale Veröffentlichungsnummer: WO9322579

(56) Entgegenhaltungen:
- WO-A-92/07201
- WO-A-92/07202
- DE-U- 9 115 195

## Beschreibung

Die Erfindung betrifft eine Betätigungsvorrichtung nach dem Oberbegriff des Anspruchs 1. Eine solche Betätigungsvorrichtung ist aus dem deutschen Gebrauchsmuster 91 15 195 bekannt. Sie weist ein hebelförmiges Betätigungsglied auf, das auf einem axialen Fortsatz eines Drehkörpers befestigt ist, welcher in einer zur Drehachse der Bremsscheibe parallelen Richtung aus dem Gehäuse der Betätigungsvorrichtung herausragt.

Gattungsgemäße Betätigungsvorrichtungen werden üblicherweise mit einem pneumatischen Membranzylinder betätigt, der neben einer Betriebsbremse auch eine Feststellbremse betätigen und deshalb verhältnismäßig groß sein muß. Bei manchen Achskonstruktionen erweist es sich als schwierig oder sogar unmöglich, einen großen Membranzylinder an einer zum Betätigen des Drehkörpers der bekannten Betätigungsvorrichtung geeigneten Stelle unterzubringen.

Der Erfindung liegt daher die Aufgabe zugrunde, eine gattungsgemäße Betätigungsvorrichtung mit selbsttätiger Nachstellung an einer Scheibenbremse so weiterzubilden, daß sie eine für schwere Fahrzeuge wie Lastkraftwagen und Omnibusse ausreichend hohe Zuspannkraft zu übertragen vermag und dennoch wenig Platz beansprucht.

Die Aufgabe ist erfindungsgemäß mit den Merkmalen des Anspruchs 1 gelöst.

Weiterbildungen ergeben sich aus den Unteransprüchen.

Ausführungsbeispiele der Erfindung werden im folgenden anhand schematischer Zeichnungen mit weiteren Einzelheiten erläutert.

Es zeigen:
Fig. 1 eine Scheibenbremse mit Betätigungsvorrichtung in Draufsicht, teilweise im Schnitt I-I in Fig. 2;
Fig. 2 die halbseitig als Schnitt II-II in Fig. 1 gezeichnete Seitenansicht der Bremse;
Fig. 3 einen vergrößerten Ausschnitt aus Fig. 1;
Fig. 4 die teilweise als Schnitt IV-IV in Fig. 1 gezeichnete Vorderansicht der Bremse;
Fig. 5 einen vergrößerten Ausschnitt aus Fig. 4;
Fig. 6 eine der Fig. 1 entsprechende, teilweise als Schnitt VI-VI in Fig. 7 gezeichnete Draufsicht einer Scheibenbremse mit abgewandelter Betätigungsvorrichtung;
Fig. 7 die zugehörige, teilweise als Schnitt VII-VII inf Fig. 6 gezeichnete Seitenansicht;
Fig. 8 den Schnitt VIII-VIII in Fig. 7;
Fig. 9 den Schnitt IX-IX in Fig. 6, und
Fig. 10 einen vergrößerten Ausschnitt aus Fig. 6 mit weiteren Einzelheiten.

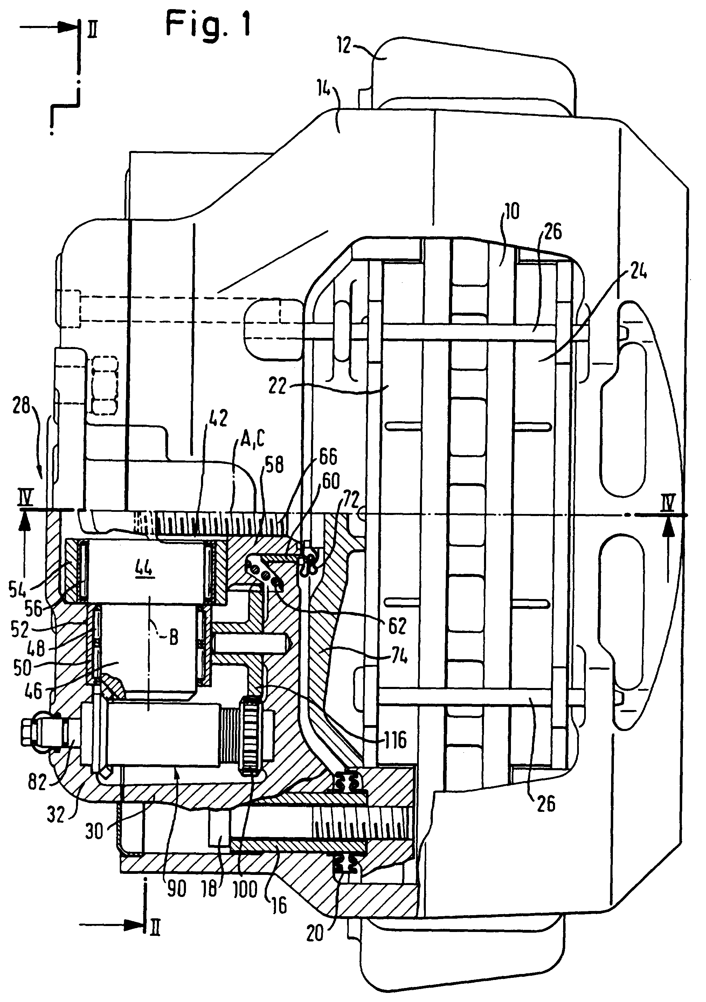

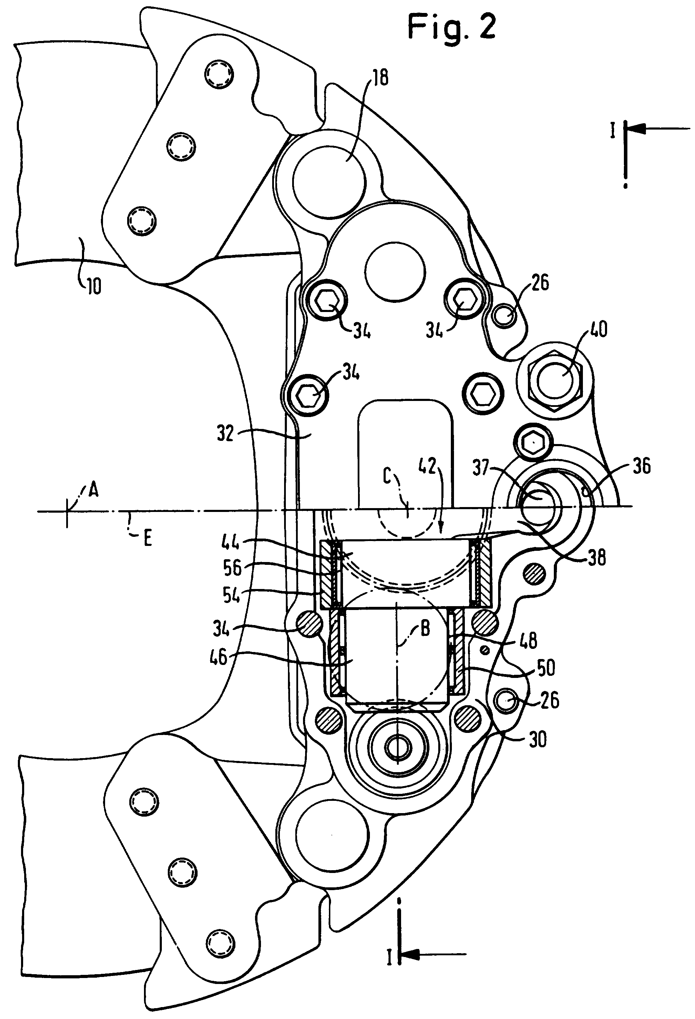

Die in Fig. 1 bis 5 dargestellte Scheibenbremse ist einer innenbelüfteten Bremsscheibe 10 zugeordnet und hat einen Bremsträger 12, an dem ein Schwimmsattel 14 parallel zur Achse A der Bremsscheibe 10 verschiebbar geführt ist. Als Führungen dienen zwei Büchsen 16, die mit je einer Innensechskantschraube 18 am Bremsträger 12 befestigt und durch Faltenbälge 20 vor Verschmutzung geschützt sind. Der Schwimmsattel 14 umgreift zwei Bremsbacken 22 und 24, die an je eine Seite der Bremsscheibe 10 anlegbar sind und wie üblich je eine Tragplatte aufweisen, an der ein Reibbelag befestigt ist. Zum Auswechseln lassen sich die Bremsbacken 22 und 24 nach oben durch eine im Schwimmsattel 14 ausgebildete Öffnung herausziehen, nachdem Haltestifte 26 gelöst worden sind.

Zum Betätigen des in Fig. 1 linken, in bezug auf die Anordnung der Bremse in einem Fahrzeug inneren Bremsbackens 22, also um diesen Bremsbacken in Fig. 1 nach rechts an die Bremsscheibe 10 anzulegen, ist eine Betätigungsvorrichtung 28 vorgesehen. Beim Anlegen des inneren Bremsbackens 22 an die Bremsscheibe 10 entstehen Reaktionskräfte, die den Schwimmsattel 14 in Fig. 1 nach links verschieben und somit den äußeren Bremsbacken 24, der am Schwimmsattel abgestützt ist, ebenfalls gegen die Bremsscheibe 10 drücken.

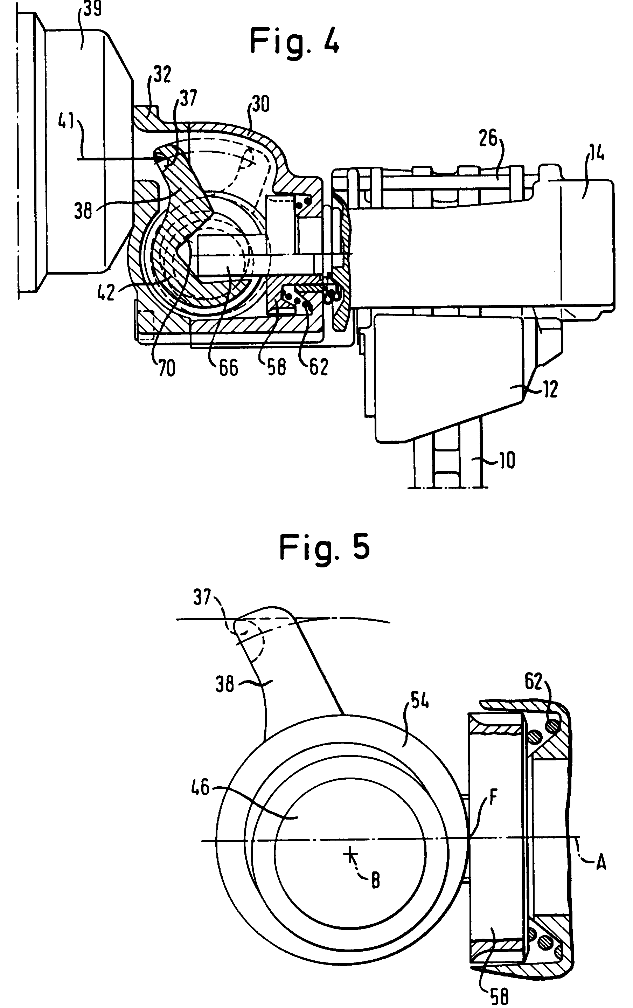

Die Betätigungsvorrichtung 28 hat ein Gehäuse 30, das im dargestellten Beispiel einstückig mit dem Schwimmsattel 14 ausgebildet ist. Am Gehäuse 30 ist ein Gehäusedeckel 32 mit Schrauben 34 befestigt. Im Gehäusedeckel 32 ist eine runde Öffnung 36 ausgespart, durch die hindurch ein mit einer Mulde 37 versehenes Ende eines hebelartigen Betätigungsgliedes 38 zugänglich ist. Zum Anschrauben eines handelsüblichen und deshalb in Fig. 4 nur angedeuteten Membranzylinders 39 ist am Gehäusedeckel 32 in der Nähe seiner Öffnung 36 ein Paar Fortsätze mit je einem Befestigungsloch 40 ausgebildet. Der Membranzylinder 39 hat einen Stößel 41, der in der Mulde 37 gegen das Betätigungsglied 38 drückt, um dieses, wie in Fig. 4 und 5 angedeutet, im Uhrzeigersinn zu schwenken.

Das Betätigungsglied 38 ist einstückiger Bestandteil eines Drehkörpers 42, der vom Gehäuse 30 und dem Gehäusedeckel 32 umschlossen ist. Durch Schwenken des Betätigungsgliedes 38 läßt sich der Drehkörper 42 um eine zur Bremsscheibenachse A normale, sie in einem Abstand kreuzende Drehachse B drehen. Der Drehkörper 42 ist im wesentlichen symmetrisch in bezug auf eine Symmetrieebene E, die sich normal, also im rechten Winkel, zur Drehachse B erstreckt und die Bremsscheibenachse A enthält. Beiderseits der Symmetrieebene E sind am Drehkörper 42 je ein Exzenter 44 sowie je ein sich daran anschließender Lagerzapfen 46 ausgebildet. Die beiden Lagerzapfen 46 sind in je einem Nadellager 48 gelagert, das einen Außenring 50 aufweist, mit dem es sich in einer im Gehäusedeckel 32 ausgebildeten Mulde 52 abstützt.

Die beiden Exzenter 44 drücken mit dem Außenring 54 je eines Nadellagers 56 gegen eine von der Bremsscheibe 10 abgewandte, hintere Stirnfläche eines hülsenförmigen ersten Schraubkörpers 58, der um eine zur Bremsscheibenachse A parallele Schraubachse C drehbar mittels einer Gleitbuchse 60 in einer durchgehenden Bohrung des Gehäuses 30 gelagert und durch eine kegelförmige Druckfeder 62 in Richtung von der Bremsscheibe 10 weg vorgespannt ist. Die Druckfeder 62 ist zwischen dem Gehäuse 30 und einem Flansch 64 des ersten Schraubkörpers 58 eingespannt.

Der erste Schraubkörper 58 bildet mit einem in ihn eingeschraubten, pilzförmigen zweiten Schraubkörper 66 einen Stößel mit selbsthemmender Nachstellgewindepaarung 68 zum axialen Nachstellen des Bremsbackens 22. Das vom Bremsbacken 22 abgewandte Ende des zweiten Schraubkörpers 66 ragt in eine zentrale Aussparung 70 des Drehkörpers 42 hinein. Dadurch, vor allem aber durch die zur Bremsscheibe 10 parallele Anordnung des Drehkörpers 42, wird der axiale Platzbedarf der Betätigungsvorrichtung 28 gering gehalten. An der Gleitbuchse 60 und am zweiten Schraubkörper 66 ist ein Faltenbalg 72 befestigt, der gegen Schmutz abdichtet.

Zwischen dem zweiten Schraubkörper 66 und dem Bremsbacken 22 ist gemäß Fig. 1 zur gleichmäßigen Verteilung von Bremsbetätigungskräften eine Platte 74 angeordnet, die gegenüber dem Bremsträger 12 axial verschiebbar, gegen Drehen jedoch durch Führungen am Bremsträger 12 festgehalten ist. Der Schraubkörper 66 ist an der Platte 74 gegen Drehen gesichert.

Wenn der Membranzylinder 39 unter Druck gesetzt wird, übt sein Stößel 41 gemäß Fig. 4 eine Kraft in einer zur Schraubachse C ungefähr parallelen Richtung auf das Betätigungsglied 38 aus und erzeugt ein Drehmoment in bezug auf die Drehachse B, so daß der Drehkörper 42 gemäß Fig. 5 im Uhrzeigersinn gedreht wird. Die Außenringe 54 der auf den beiden Exzentern 44 angeordneten Nadellager 56 übertragen die beim Drehen des Drehkörpers 42 entstehenden Kräfte im wesentlichen verschleißfrei auf den ersten Schraubkörper 58, den sie in je einem linienförmigen Berührungsbereich F berühren. Der Berührungsbereich F kann je nach Stellung des Drehkörpers 42 geringfügig über oder unter der Schraubachse C liegen.

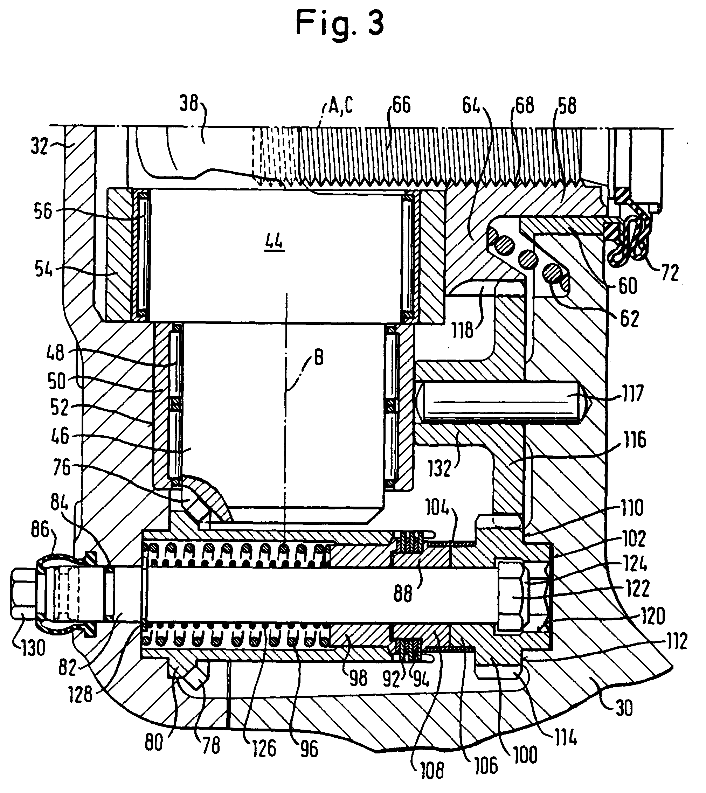

Wegen der Selbsthemmung der Nachstellgewindepaarung 68 nimmt der zweite Schraubkörper 66, und somit auch die Platte 74, an der Axialverschiebung des ersten Schraubkörpers 58 teil, so daß der innere Bremsbacken 22 an die Bremsscheibe 10 angelegt wird. Die dabei entstehenden Reaktionskräfte werden über den Gehäusedeckel 32 in das Gehäuse 30 eingeleitet und führen zu einer Verschiebung des Schwimmsattels, in Fig. 1 und 3 nach links, so daß auch der äußere Bremsbacken 24 an die Bremsscheibe 10 angelegt wird.

Der in Fig. 1 und 3 untere Lagerzapfen 46 weist an seinem unteren Ende eine Kegelverzahnung 76 auf, die mit einer Kegelverzahnung 78 an einer Hülse 80 kämmt.Der Drehkörper 42 ist also mit der Hülse 80 durch einen Winkeltrieb verbunden. Alternativ könnte der Winkeltrieb auch von einer Schnecken- oder Schraubzahnpaarung gebildet sein.

Die Hülse 80 ist in einem Abstand parallel zur Schraubachse C im Gehäusedeckel 32 drehbar gelagert und umschließt eine Rückstellwelle 82, die im Gehäusedeckel 32 gelagert und dort durch einen Dichtring 84 sowie eine Manschette 86 abgedichtet ist. Die Hülse 80 gehört ebenso wie eine weitere auf der Rückstellwelle 82 gelagerte Hülse 88 zu einer Kupplungsanordnung 90, die ferner eine Lamellenkupplung mit Lamellen 92 und 94 aufweist. Die Lamellen 92 sind mit der verzahnten Hülse 80, die Lamellen 94 hingegen mit der Hülse 88 zu gemeinsamer Drehung verbunden. Die Verbindung zwischen den Lamellen 94 und der Hülse 88 hat ein Spiel um einen bestimmten Drehwinkel, der das Bremslüftspiel der Bremse bestimmt.

Das Lamellenpaket 92, 94 steht unter der axialen Spannung einer Druckfeder 96, die zwischen dem Gehäuse 30 und einem auf der Rückstellwelle 82 angeordneten Druckring 98 eingespannt ist. Infolgedessen wird eine Drehung der verzahnten Hülse 80 über das Lamellenpakte 92, 94 reibschlüssig auf die Hülse 88 übertragen, solange dabei ein bestimmtes Drehmoment nicht überschritten wird.

An die Hülse 88 schließt sich in axialer Richtung ein Ritzel 100 an, das in einer Ausnehmung 102 des Gehäuses 30 drehbar gelagert ist und mit der Kupplungshülse 88 durch eine wendelförmige Schlingfeder 104 verbunden ist, die je einen Kupplungsabschnitt 106 bzw. 108 des Ritzels 100 und der Hülse 88 ohne Radialspiel umschlingt. Die Schlingfeder 104 ist so gewickelt, daß sie sich in Betätigungsdrehrichtung zuzieht und das Ritzel 100 mitnimmt, während sie sich beim Rückdrehen der Kupplungshülse 88 öffnet. Somit bildet die Schlingfeder 104 mit den beiden Kupplungsabschnitten 106 und 108 eine Freilauf-Rutschkupplung, die ein Drehmoment von der Hülse 88 nur in Betätigungsdrehrichtung auf das Ritzel 100 überträgt, jedoch eine Rückdrehung der Hülse 88 ohne das Ritzel 100 ermöglicht.

Das Ritzel 100 hat eine kreisringförmige Stirnfläche 110, die von der Kraft der Druckfeder 96 normalerweise an einer Anlagefläche 112 am Gehäuse 30 anliegend gehalten wird, sodaß das Ritzel 100 durch Reibung an einer unbeabsichtigten Drehung gehindert ist.

Mit dem Ritzel 100 kämmt eine Verzahnung 114 eines Zwischenrades 116, das auf einem im Gehäuse 30 angeordneten Stift 117 drehbar gelagert ist und mit einer am ersten Schraubkörper 58 ausgebildeten Außenverzahnung 118 in Eingriff steht. Am Ritzel 100 ist ein Innensechskant 120 ausgebildet, dem ein an der Rückstellwelle 82 ausgebildeter Außensechskant 122 zugeordnet ist. Durch axiales Verschieben der Rückstellwelle 82 lassen sich die beiden Sechskante 120 und 122 miteinander in Eingriff bringen, was durch einen am Ende der Rückstellwelle 82 ausgebildetem Konus 124 erleichtert wird. Rings um die Rückstellwelle 82, radial innerhalb der Druckfeder 96 ist eine weitere, schwächere Druckfeder 126 angeordnet, die zwischen dem Druckring 98 und einem auf der Rückstellwelle 82 befestigten Sicherungsring 128 eingespannt ist. Dadurch ist die Rückstellwelle 82 so vorgespannt, daß ihr Außensechskant 122 normalerweise nicht in den Innensechskant 120 eingreift.

Beim Betätigen der Bremse wird die durch das Verschwenken des Betätigungsgliedes 38 hervorgerufene Drehung des Drehkörpers 42 über den von den beiden Kegelverzahnungen 76 und 78 gebildeten Winkeltrieb in eine Drehung der Hülse 80 umgesetzt. Nach Überwinden des erwähnten Drehspiels zwischen den Lamellen 94 und der Hülse 88 wirkt ein Drehmoment auf die Hülse 88 und weiter über die Schlingfeder 104 auf das Ritzel 100 und schließlich über das Zwischenrad 116 und die AuBenverzahnung 118 auf den ersten Schraubkörper 58. Dieser dreht sich jedoch dann nicht, wenn das Bremslüftspiel von normalerweise etwa 0,5 mm bei der Bremsbetätigung schon vor dem erwähnten Drehspiel überwunden worden ist, die beiden Bremsbacken 22 und 24 sich also an die Bremsscheibe 10 angelegt haben und diese eine der Betätigungskraft entsprechende Reaktionskraft über den von den beiden Schraubkörpern 58 und 66 gebildeten Stößel auf die beiden Exzenter 44 überträgt. Die dabei in der Nachstellgewindepaarung 68 auftretende Reibung ist größer als das von der Kupplung 98 übertragbare Drehmoment.

Wird jedoch bei Betätigung der Bremse das Drehspiel zwischen den Lamellen 94 und der Hülse 88 überwunden, ohne daß die Bremsbacken 22 und 24 die Bremsscheibe 10 erreichen und eine entsprechende Reaktionskraft entstehen lassen haben, so wird die Drehung der Hülse 80 über das Lamellenpaket 92, 94 auf die Hülse 88, von dieser weiter über die Schlingfeder 104 auf das Ritzel 100 und schließlich auf den ersten Schraubkörper 58 übertragen, so daß dieser derart gedreht wird, daß der von ihm und dem zweiten Schraubkörper 66 gebildete Stößel verlängert wird.

Beim Lösen der Bremse wird zwar die nun entgegengesetzte Drehbewegung des Drehkörpers 42 auf die Hülse 80 übertragen, jedoch nicht mehr zum Ritzel 100 weitergeleitet, da die Schlingfeder 104 sich in dieser Drehrichtung öffnet und somit verhindert, daß das Ritzel 100 sich mitdreht.

Durch Nachstellvorgänge der beschriebenen Art wird während der Lebensdauer der Bremsbacken 22 und 24 der zweite Schraubkörper 66 schrittweise immer weiter aus dem ersten Schraubkörper 58 herausgeschraubt. Wenn die Bremsbacken 22, 24 ihre Verschleißgrenze erreicht haben und ausgewechselt werden müssen, ist es erforderlich, die beiden Schraubkörper 58 und 66 wieder ineinanderzuschrauben, bis sie ihre in den Zeichnungen abgebildete Ausgangsstellung erreicht haben. Zu diesem Zweck wird die Rückstellwelle 82 gegen die Kraft der Druckfeder 126 axial, in Fig. 1 und 3 nach rechts, verschoben, bis der Außensechskant 122 in den Innensechskant 120 eingreift. Nun kann, beispielsweise mit einem Schlüssel, der auf das als Sechskant 130 ausgebildete äußere Ende der Rückstellwelle 82 aufgesetzt worden ist, zusammen mit dieser das Ritzel 100, und somit über das Zwischenrad 116 auch der erste Schraubkörper 58 gedreht werden, während der zweite Schraubkörper 66 durch die Platte 74 am Drehen gehindert bleibt.

Sobald man die Rückstellwelle 82 freigibt, wird sie von der Druckfeder 126 wieder in ihre abgebildete Normalstellung verschoben, in der ihr Außensechskant 122 nicht mehr in den Innensechskant 120 des Ritzels 100 eingreift.

Das Zwischenrad 116 hat eine Nabe 132 mit einer Stirnfläche, die beim Einbau des Drehkörpers 42 in das Gehäuse 30 eine Anlagefläche für den Außenring 50 des Nadellagers 48 bildet. Zur Montage sind die beiden Schraubkörper 66 und 58 so weit wie möglich ineinandergeschraubt. Sobald der Gehäusedeckel 32 aufgesetzt worden ist und die Schrauben 34 festgezogen sind, wird die Bremse mehrmals betätigt, so daß der zweite Schraubkörper 66 ein Stück weit aus dem ersten Schraubkörper 58 herausgeschraubt wird und die Druckfeder 62 den Flansch 64 des ersten Schraubkörpers 58 gegen die Außenringe 54 der beiden Nadellager 56 drückt. Dadurch ist der Drehkörper 42 endgültig in seiner normalen Lage gehalten, in der die Außenringe 50 der beiden Nadellager 48 in je einer der beiden Mulden 52 liegen.

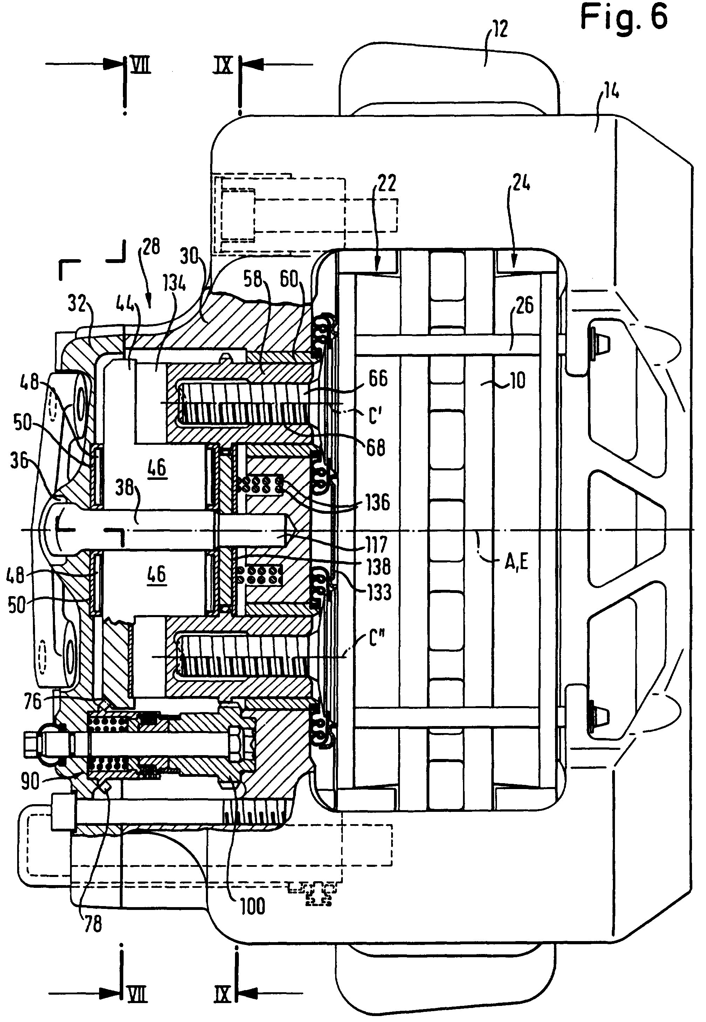

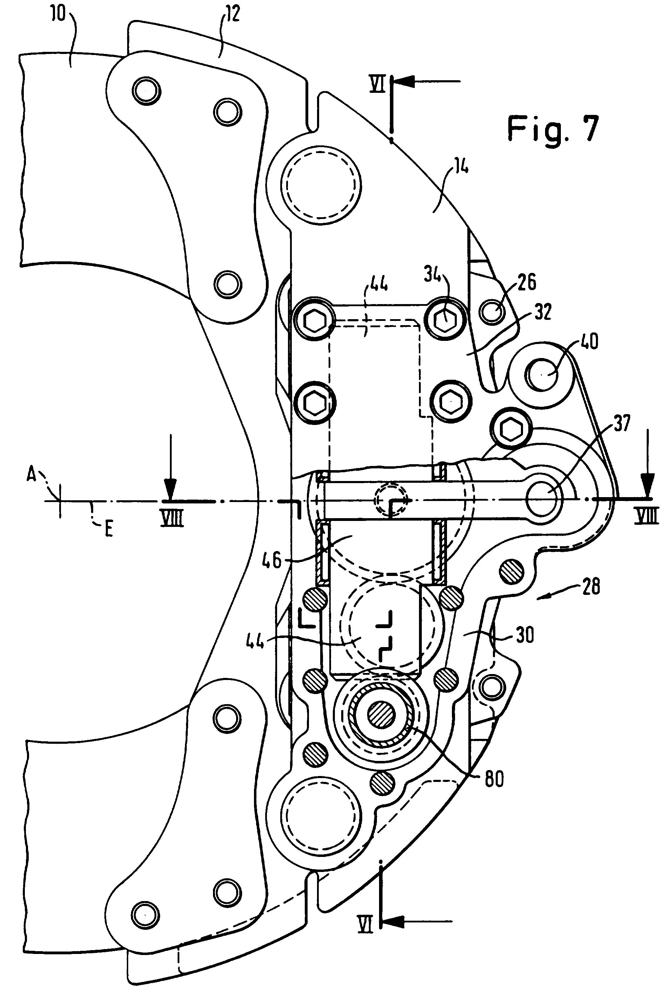

Die Scheibenbremse gemäß Fig. 6 bis 10 stimmt mit der im vorstehenden beschriebenen, in Fig. 1 bis 5 dargestellten Scheibenbremse im wesentlichen überein; Unterschiede bestehen jedoch in Einzelheiten der Betätigungsvorrichtung 28:

Abweichend von Fig. 1 bis 5 sind im Gehäuse 30 der Betätigungsvorrichtung 28 gemäß Fig. 6 bis 10 zwei nachstellbare Stößel vorgesehen, die je einen ersten Schraubkörper 58 und je einen zweiten Schraubkörper 66 aufweisen und auf je einer Seite der Symmetrieebene E in einem Abstand parallel zu ihr angeordnet sind. Die beiden zweiten Schraubkörper 66 sind miteinander durch eine dünne Metallplatte 133, die zugleich als Hitzeschild dient, derart verbunden, daß sie sich nicht drehen können.

Der Drehkörper 42 hat wiederum zwei Exzenter 44; diese sind jedoch in je einem Endbereich des Drehkörpers angeordnet und wirken über je einen zylindrischen Wälzkörper 134 auf je einen ersten Schraubkörper 58 ein. Zwischen den beiden Exzentern 44 ist am Drehkörper 42 gemäß Fig. 6 ein Paar Lagerzapfen 46 ausgebildet, die sich - insoweit übereinstimmend mit der Ausführungsform gemäß Fig. 1 bis 5 - über den Außenring 50 je eines Nadellagers 48 in einer Mulde 52 an der Innenseite des Gehäusedeckels 32 abstützen.

Ähnlich wie der in Fig. 1 bis 5 vorgesehene einzige erste Schraubkörper 58 sind bei der Ausführungsform gemäß Fig. 6 bis 10 beide ersten Schraubkörper 58 durch eine Getriebeverbindung, die einen Winkeltrieb und eine Kupplungsanordnung 90 enthält, an den Drehkörper 42 angeschlossen. Der Winkeltrieb ist auch in diesem Beispiel von miteinander kämmenden Kegelradverzahnungen 76 und 78 gebildet. Die Kupplungsanordnung 90 als solche ist gemäß Fig. 6 ähnlich gestaltet wie in Fig. 1 und 3. Das Ritzel 100 kämmt jedoch gemäß Fig. 6 unmittelbar mit der Außenverzahnung 118 an dem benachbarten ersten Schraubkörper 58, und erst daran schließt sich ein Zwischenrad 116 an, das mit den Außenverzahnungen 118 beider ersten Schraubkörper 58 kämmt.

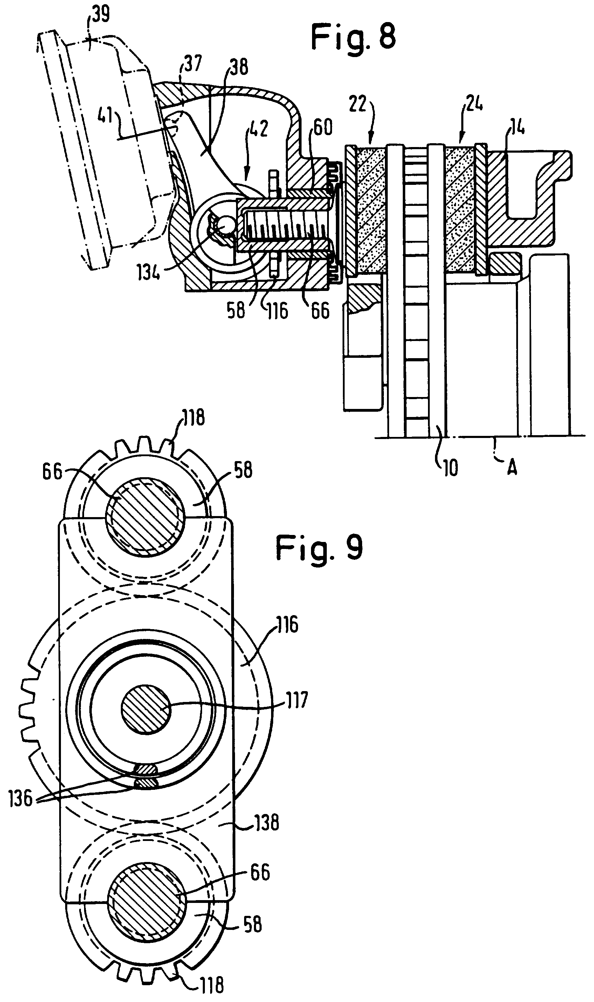

Der Stift 117, auf dem das Zwischenrad 116 gelagert ist, ist gemäß Fig. 6 in der Symmetrieebene E angeordnet und liegt mit seiner in Fig. 6 linken Stirnfläche an einem zylindrischen Abschnitt des Drehkörpers 42 drucklos an, sodaß dieser in seiner Lage gesichert ist. Konzentrisch rings um den Stift 117 ist ein Paar Druckfedern 136 angeordnet, das zwischen dem Gehäuse 30 und einer Zwischenplatte 138 eingespannt ist. Die Zwischenplatte 138 ist gemäß Fig. 9 im wesentlichen rechteckig, hat jedoch an ihren beiden Schmalseiten je eine halbkreisförmige Aussparung. Mit den Rändern dieser Aussparungen drückt die Zwischenplatte 138 stirnseitig gegen je einen Fußbereich der Verzahnungen 118 an den beiden ersten Schraubkörpern 58. Durch die Druckfedern 136 werden somit die beiden Schraubkörper 58 in Richtung von der Bremsscheibe 10 weg belastet und gegen den zugehörigen Wälzkörper 134 gedrückt.

Die Ausführungsform gemäß Fig. 6 bis 10 hat gegenüber der in Fig. 1 bis 5 dargestellten den Vorteil, daß die durch Drehen des Drehkörpers 42 hervorgerufenen Betätigungskräfte sich auf die beiden von je zwei Schraubkörpern 58 und 66 gebildeten nachstellbaren Stößel verteilen, also längs deren Schraubachsen C' und C" auf den Bremsbacken 22 einwirken. Wegen dieser von vorneherein güngstigeren Kräfteverteilung kann die in Fig. 1 dargestellte Platte 74 fortgelassen werden. Auf diese Weise wird zusätzlich an axialem Bauraum gespart.

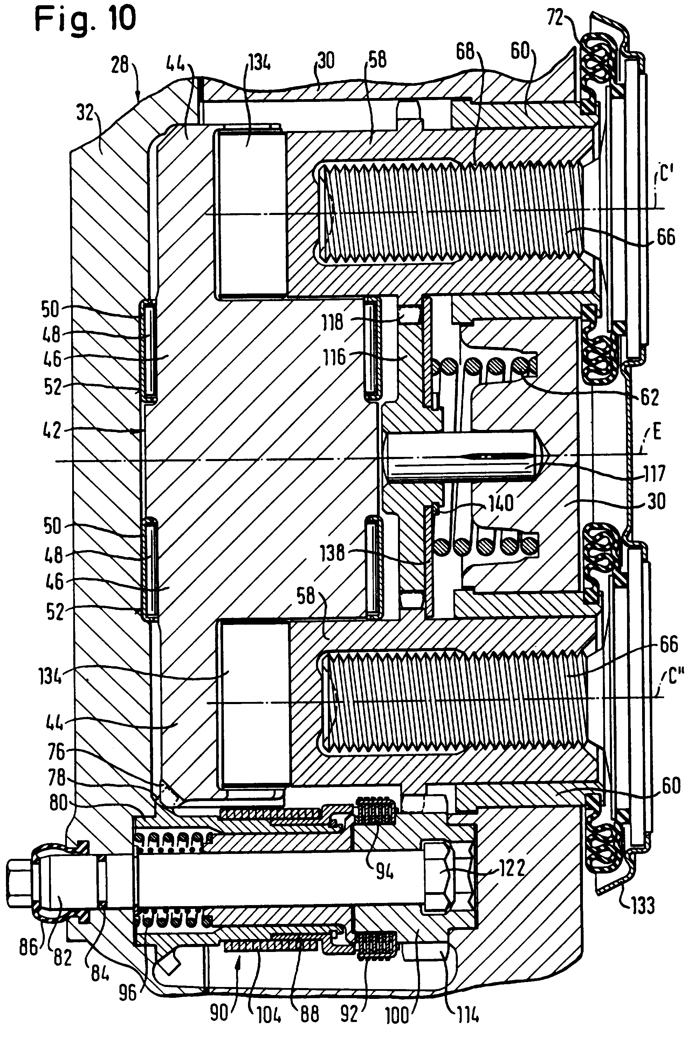

Gemäß Fig. 10 ist die Zwischenplatte 138 durch einen Sicherungsring 140 mit dem Zwischenrad 116 zu gemeinsamer Axialverschiebung verbunden. Dadurch wird sichergestellt, daß die Außenverzahnungen 118 an den Schraubkörpern 58 auf ihrer gesamten Zahnbreite mit dem Zwischenrad 116 auch dann in Eingriff bleiben, wenn die Schraubkörper 58 bei einer kräftigen Bremsbetätigung weit nach rechts verschoben werden.

In Fig. 10 sind außerdem einige Einzelheiten der Kupplungsanordnung 90 in einer von Fig. 3 und 6 abweichenden Anordnung dargestelit. So ist die Hülse 88 auf der Hülse 80 gelagert und mit dieser durch die Schlingfeder 104 gekuppelt. Die Lamellen 92, 94 sind hingegen nicht mehr zur Drehmomentübertragung zwischen den Hülsen 80 und 88 sondern zwischen der Hülse 88 und dem Ritzel 100 angeordnet. Dadurch sind die mit der Schlingfeder 104 zusammenwirkenden Bauteile - gemäß Fig. 10 sind dies die beiden Hülsen 80 und 88 - dem Einfluß der Kräfte der Druckfedern 96 und 126 entzogen und lassen sich deshalb in einer Richtung, in der die Schlingfeder 104 unwirksam ist, gegen sehr geringen Reibungswiderstand gegeneinander verdrehen. Infolgedessen behindert die Kupplungsanordnung 90 die Rückdrehung des Drehkörpers 42 beim Lösen der Bremse nicht merklich. Deshalb können die Druckfedern 136 (Fig. 6) bzw. die Druckfeder 62 (Fig. 1 und 10) ihre Aufgabe als Rückstellfedern erfüllen, auch wenn sie in dem für sie zur Verfügung stehenden knappen Bauraum nicht besonders kräftig bemessen sein können.

## Patentansprüche

1. Betätigungsvorrichtung mit selbsttätiger Nachstellung an Scheibenbremsen, insbesondere für Lastkraftwagen und Omnibusse, mit
- einem Gehäuse (30), das in Einbaulage axial neben einer Bremsscheibe (10) angeordnet ist,
- einem ersten Schraubkörper (58), der im Gehäuse (30) um eine zur Achse (A) der Bremsscheibe (10) parallele Schraubachse (C; C', C") drehbar gelagert ist,
- einem zweiten Schraubkörper (66), der gegen Drehen festgehalten und mit dem ersten Schraubkörper (58) durch eine Nachstellgewindepaarung (68) verbunden ist, sodaß die beiden Schraubkörper (58, 66) gemeinsam einen längeneinstellbaren Stößel zum Ausüben einer Betätigungskraft auf einen Bremsbacken (22) bilden,
- einem Drehkörper (42), der zum axialen Verschieben des Stößels mittels eines Betätigungsgliedes (38) um eine eigene Drehachse (B) drehbar ist, und
- einer Getriebeverbindung zwischen dem Drehkörper (42) und dem ersten Schraubkörper (58) mit einer Kupplungsanordnung (90), die ein begrenztes Drehmoment zum Nachstellen des genannten Bremsbackens überträgt,
dadurch **gekennzeichnet** , daß
- die Drehachse (B) des Drehkörpers (42) mindestens annähernd parallel zur Bremsscheibe (10) angeordnet ist,
- die Getriebeverbindung zwischen dem Drehkörper (42) und dem ersten Schraubkörper (58) einen Winkeltrieb aufweist,
- der Drehkörper (42) in bezug auf eine die Achse (A) der Bremsscheibe (10) enthaltende Symmetrieebene (E) mindestens annähernd symmetrisch ist,
- der Drehkörper (42) eine Aussparung (70) aufweist, in die der zweite Schraubkörper (66) mit einem vom genannten Bremsbacken (22) abgewandten Endabschnitt hineinragt.

2. Betätigungsvorrichtung nach Anspruch 1,
dadurch **gekennzeichnet**, daß die Aussparung (70) im Drehkörper (42) zentral angeordnet ist.

3. Betätigungsvorrichtung nach Anspruch 1 oder 2,
dadurch **gekennzeichnet** , daß der Drehkörper (42) beidseits der Symmetrieebene (E) mittels je eines Lagerzapfens (46) in einem Deckel (32) des Gehäuses (30) abgestützt ist.

4. Betätigungsvorrichtung nach einem der Ansprüche 1 bis 3,
dadurch **gekennzeichnet**, daß der Drehkörper (42) beidseits der Symmetrieebene (E) je einen Exzenter (44) aufweist.

5. Betätigungsvorrichtung nach Anspruch 4,
dadurch **gekennzeichnet**, daß auf jedem Exzenter (44) ein Wälzkörper (54; 134) zur Kraftübertragung auf den zugehörigen Schraubkörper (58) gelagert ist.

6. Betätigungsvorrichtung nach einem der Ansprüche 1 bis 5,
dadurch **gekennzeichnet**, daß beidseits der Symmetrieebene (E) je ein durch Drehen des Drehkörpers (42) axial verschiebbarer, einen ersten Schraubkörper (58) und einen zweiten Schraubkörper (66) aufweisender nachstellbarer Stößel zum gemeinsamen Ausüben einer Betätigungskraft auf den genannten Bremsbacken (22) angeordnet ist.

7. Betätigungsvorrichtung nach einem der Ansprüche 1 bis 6,
dadurch **gekennzeichnet** , daß die Getriebeverbindung zwischen der Kupplungsanordnung (90) und dem zweiten Schraubkörper (66) des bzw. jedes Stößels Verzahnungen (114, 118) an der Kupplungsanordnung (90) und an dem ersten Schraubkörper (58) umfaßt.

8. Betätigungsvorrichtung nach Anspruch 6 in Verbindung mit Anspruch 7,
dadurch **gekennzeichnet**, daß
- die Nachstellgewindepaarungen (68) der beiden Stößel in bezug zueinander gleichläufig sind und
- die beiden ersten Schraubkörper (58) beider Stößel (58, 66) durch ein Zwischenrad (116) zu gleichläufiger Drehung miteinander verbunden sind.

9. Betätigungsvorrichtung nach einem der Ansprüche 1 bis 8, dadurch **gekennzeichnet**, daß der Winkeltrieb von miteinander kämmenden Kegelradverzahnungen (76, 78) am Drehkörper (42) und an der Kupplungsanordnung (90) gebildet ist.

## Claims

1. An actuating device with automatic readjustment on disc brakes, especially for trucks and buses, comprising
- a casing (30) which is disposed axially beside a brake disc (10) in built-in position,
- a first threaded member (58) which is supported in the casing (30) for rotation about a screw axis (C; C'; C") in parallel with the axis (A) of the brake disc (10),
- a second threaded member (66) which is fixed against rotation and connected to the first threaded member (58) by a readjustment thread pair (68) so that the two threaded members (58, 66) together form a longitudinally adjustable tappet for exerting an actuating force on a brake pad (22),
- a rotary member (42) which is rotatable about an axis of rotation (B) of its own for axially displacing the tappet by means of an actuator member (38), and
- a gear connection between the rotary member (42) and the first threaded member (58), comprising a coupling arrangement (90) which transmits a limited torque for readjustment of the brake pad mentioned, **characterized** in that
- the axis of rotation (B) of the rotary member (42) is disposed at least approximately parallel to the brake disc (10),
- the gear connection between the rotary member (42) and the first threaded member (58) comprises an angular drive,
- the rotary member (42) is at least approximately symmetrical with respect to a plane of symmetry (E) which contains the axis (A) of the brake disc (10),
- the rotary member (42) has a recess (70) into which projects that end portion of the second threaded member (66) which is remote from said brake pad (22).

2. The actuating device as claimed in claim 1, characterized in that the recess (70) is located centrally in the rotary member (42).

3. The actuating device as claimed in claim 1 or 2, characterized in that the rotary member (42) is supported at either side of the plane of symmetry (E) by a respective journal pin (46) in a cover (32) of the casing (30).

4. The actuating device as claimed in any one of claims 1 to 3, characterized in that the rotary member (42) comprises an eccentric (44) each at both sides of the plane of symmetry (E).

5. The actuating device as claimed in claim 4, characterized in that a respective roller body (54; 134) is supported on each eccentric (44) for power transmission to the corresponding threaded member (58).

6. The actuating device as claimed in any one of claims 1 to 5, characterized in that a readjustable tappet each is arranged at both sides of the plane of symmetry (E), being axially displaceable by rotation of the rotary member (42) and comprising a first threaded member (58) and a second threaded member (66) for joint exertion of an actuating force on said brake pad (22).

7. The actuating device as claimed in any one of claims 1 to 6, characterized in that the gear connection between the coupling arrangement (90) and the second threaded member (66) of the or each tappet comprises toothings (114, 118) formed at the coupling arrangement (90) and at the first threaded member (58).

8. The actuating device as claimed in claim 6 in combination with claim 7, characterized in that
- the readjustment thread pairs (68) of the two tappets have the same course of thread with respect to each other, and
- the two first threaded members (58) of both tappets (58, 66) are interconnected by an intermediate gear (116) for synchronized rotation.

9. The actuating device as claimed in any one of claims 1 to 8, characterized in that the angular drive is constituted by meshing bevel gear toothings (76, 78) with which the rotary member (42) and the coupling arrangement (90) are formed.

## Revendications

1. Dispositif de commande avec rattrapage de jeu automatique, pour freins à disque, en particulier pour camions et autobus, comportant
- un carter (30), disposé, une fois monté, axialement contre un disque de frein (10),
- un premier corps fileté (58), qui est monté dans le carter (30) de façon à tourner autour d'un axe fileté (C; C'; C"") parallèle à l'axe (A) du disque de frein (10),
- un deuxième corps fileté (66), qui est maintenu fixe, sans possibilité de tourner, et qui est relié au premier corps fileté (58) par un accouplement fileté de rattrapage de jeu (68), de telle façon que les deux corps filetés (58, 66) forment ensemble un coulisseau réglable longitudinalement pour exercer une force de commande sur une mâchoire de frein (22),
- un corps tournant (42), pouvant tourner autour de son propre axe de rotation (B), pour faire coulisser axialement le coulisseau au moyen d'un organe de commande (38),
- une liaison par engrenage entre le corps tournant (42) et le premier corps fileté (58), comportant un dispositif d'accouplement (90), qui transmet un couple de rotation limité pour le rattrapage de jeu de ladite mâchoire de frein,
caractérisé en ce que
- l'axe de rotation (B) du corps tournant (42) est disposé, au moins approximativement, parallèlement au disque de frein (10),
- la liaison par engrenage entre le corps tournant (42) et le premier corps fileté (58) présente un entraînement à renvoi d'angle,
- le corps tournant (42) est disposé, au moins approximativement, de façon symétrique par rapport à un plan de symétrie (E) contenant l'axe (A) du disque de frein (10).
- le corps tournant (42) présente un évidement (70), dans lequel le deuxième corps fileté (66) pénêtre par une partie d'extrémité opposée à la mâchoire de frein (22).

2. Dispositif de commande suivant la revendication 1, caractérisé en ce que l'évidement (70) dans le corps tournant (42) est disposé au centre de celui-ci.

3. Dispositif de commande suivant la revendication 1 ou la revendication 2, caractérisé en ce que le corps tournant (42) prend appui, des deux côtés du plan de symétrie (E), chaque fois au moyen d'un pivot d'appui (46), dans un couvercle (32) du carter (30).

4. Dispositif de commande suivant l'une des revendications 1 à 3, caractérisé en ce que le corps tournant (42) présente, des deux côtés du plan de symétrie (E), chaque fois un excentrique (44).

5. Dispositif de commande suivant la revendication 4, caractérisé en ce que, sur chaque excentrique (44), est monté un corps de roulement (54, 134) pour transmettre la force au corps fileté (58) associé.

6. Dispositif de commande suivant l'une des revendications 1 à 5, caractérisé en ce que, sur chacun des côtés du plan de symétrie (E), est disposé un coulisseau comportant un rattrapage de jeu, pouvant coulisser axialement sous l'effet d'une rotation du corps tournant (42) et présentant un premier corps fileté (58) et un deuxième corps fileté (66), pour exercer en commun une force de commande sur ladite mâchoire de frein (22).

7. Dispositif de commande suivant l'une des revendications 1 à 6, caractérisé en ce que la liaison par engrenage entre le dispositif d'accouplement (90) et le deuxième corps fileté (66) du, ou de chaque coulisseau, comporte des dentures (114, 118) sur le dispositif d'accouplement (90) et sur le premier corps fileté (58).

8. Dispositif de commande suivant la revendication 6 en liaison avec la revendication 7, caractérisé en ce que
- les accouplements filetés de rattrapage de jeu (68) des deux coulisseaux (58, 66) tournent de façon égale l'un par rapport à l'autre.
- les deux premiers corps filetés (58) des deux coulisseaux sont reliés entre eux par un pignon intermédiaire (116) pour tourner de façon égale l'un par rapport à l'autre.

9. Dispositif de commande suivant l'une des revendications 1 à 8, caractérisé en ce que l'entraînement à renvoi d'angle est formé par des dentures coniques (76, 78) engrenant l'une avec l'autre, prévues sur le corps tournant (42) et sur le dispositif d'accouplement (90).
